(19) Europäisches Patentamt
European Patent Office
Office européen des brevets

(11) **EP 3 723 252 B1**

(12) **EUROPEAN PATENT SPECIFICATION**

(45) Date of publication and mention
of the grant of the patent:
**27.10.2021 Bulletin 2021/43**

(51) Int Cl.:
*H02M 1/00* (2006.01)  *H02M 1/42* (2007.01)
*H02M 7/217* (2006.01)  *H02M 1/08* (2006.01)

(21) Application number: **19168364.8**

(22) Date of filing: **10.04.2019**

(54) **POWER CONVERTER CONTROLLER, POWER CONVERTER AND CORRESPONDING METHOD**

STROMRICHTERSTEUERGERÄT, STROMRICHTER UND ENTSPRECHENDES VERFAHREN

COMMANDE DE CONVERTISSEUR DE PUISSANCE, CONVERTISSEUR DE PUISSANCE ET PROCÉDÉ CORRESPONDANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.10.2020 Bulletin 2020/42**

(73) Proprietor: **Infineon Technologies Austria AG
9500 Villach (AT)**

(72) Inventors:
• **KRUEGER, Martin
85764 Oberschleißheim (DE)**
• **FAHLENKAMP, Marc
82538 Geretsried (DE)**

(74) Representative: **Sticht, Andreas
Kraus & Weisert
Patentanwälte PartGmbB
Thomas-Wimmer-Ring 15
80539 München (DE)**

(56) References cited:
**EP-A1- 2 899 863       EP-A1- 3 076 537
US-A1- 2017 310 224**

**Description**

TECHNICAL FIELD

The present application relates to power converter controllers, power converters and corresponding methods.

BACKGROUND

Power converters are devices which convert an input electrical power, for example an AC (alternating current) mains voltage, to an output electrical power, for example a DC (direct current) voltage, for supplying various electrical appliances. One type of power converters are switched mode power supplies (SMPS), where one or more power switches are operated according to a switching scheme to provide a desired output power, for example having a desired output voltage. For example, such power switches may be operated according to a pulse width modulation (PWM) scheme in some modes of operation.

In many practical implementations, switched mode power supplies having at least two power stages are used. A first stage receives an AC voltage, for example AC mains voltage, and provides a DC bus voltage. A second stage converts this bus voltage into an output voltage that supplies a load. In some applications, the first power stage may be a power factor correction (PFC) stage. The power factor is a dimensionless number which is defined as the ratio of the real power absorbed by the load to the apparent power flowing in the circuit. A power factor of less than 1 indicates that the voltage and current are not in phase, which leads to losses. Therefore, a power factor at or close to 1 or -1 is desired and in some instances even demanded by legal provisions.

The second stage may then be a voltage converter stage like a buck converter, a boost converter, a buck-boost converter, a resonant converter like a LLC converter etc.

The power stages are usually controlled by a controller which controls switching of one or more switches in each of the power stages. In some instances, when a human touches a housing of the power converter, due to capacitive effects and the changing currents and voltages due to the switching a so-called touch current may occur.

One mode of operation for power converters is so-called burst mode operation. Here, during active phases, also referred to as bursts herein, the second stage provides more power than consumed by the load. In an inactive phase outside the bursts, the second stage provides less power than consumed by the load, typically no power. For example, during bursts power switches are switched to ultimately provide power at the output of the second stage, whereas in the inactive phases the power switches are open (non-conducting) such that no power is provided. Typically, such a burst mode operation is used in low load conditions, where the power consumption by the load ranges from zero to a maximum threshold power consumption. For power consumption above this threshold, other modes of operations are used. Therefore, this threshold is also referred to as burst mode exit threshold. In the inactive phases, the above-mentioned controller may be turned off or may be set to some sleep mode in order to save power.

In a power converter with two or more power stages, more than one, for example all, power stages may be operated in such a burst mode. Different criteria apply to different power stages as regards the desired or optimized timing of such bursts. For example, for a first stage like a power factor correction stage, it is preferred if bursts start near an extremum (maximum or minimum), corresponding to a maximum of the absolute value, of the AC input signal, both to allow optimum use of power efficiency and to reduce problems with the touch current mentioned above. For a last, for example second, stage, it is desirable that the burst timing matches the load requirements, e.g. to reduce ripples in an output voltage. Furthermore, the efficiency for the power transfer between the stages is to be taken into account.

Existing control schemes have different drawbacks under certain conditions, for example very low loads near zero or load near the above-mentioned burst mode exit threshold.

US 2017 / 310 224 A1 discloses a controller according to the preamble of claim 1 and a method according to the preamble of claim 12.

EP 2 899 863 A1 and EP 3 076 537 A1 disclose controlling a two-stage cascaded power converter having a burst mode.

SUMMARY

A power converter controller as defined in claim 1, and a method as defined in claim 12 are provided. The dependent claims define further embodiments of the power converter controller and the method, a power converter comprising such a method as well as a computer program related to the method.

According to an embodiment, a power converter controller is provided, comprising:

a first output to be coupled to a first power switch of a first stage of a power converter,
a second output to be coupled to a second power switch of a second stage of the power converter, wherein an output of the first stage is coupled to an input of the second stage,

an input to receive a feedback related to a load of the power converter, and

a control logic configured to control the first power switch and the second power switch at least in a burst mode of operation,

wherein the control logic, in the burst mode of operation, is configured to:

determine a temporal position of a next burst of the second power switch based on the feedback, and

determine a temporal position of a next burst of the first power switch based on the temporal position of the next burst of the second power switch and a predefined phase range with respect to a predefined phase position for a phase of an input signal of the power converter.

According to another embodiment, a method for controlling a power converter in a burst mode is provided,

the power converter comprising a first stage comprising a first power switch, and

a second stage comprising a second power switch, wherein an output of the first stage is coupled to an input of the second stage,

the method comprising:

determining a temporal position of a next burst of the second power switch based on the feedback, and

determining a temporal position of a next burst of the first power switch based on the temporal position of the next burst of the second power switch and a predefined phase range with respect to a predefined phase position for a phase of an input signal of the power converter.

The above summary is merely intended to give a brief overview over some embodiments and is not to be construed as limiting in any way.

BRIEF DESCRIPTION OF THE DRAWINGS

Fig. 1 is a block diagram of a power converter according to an embodiment.

Fig. 2 is a block diagram of a power converter controller according to an embodiment.

Fig. 3 is a diagram for explaining burst mode as used in some embodiments.

Fig. 4 is a diagram illustrating a timing of burst modes according to some embodiments.

Fig. 5 is a flow chart illustrating a method according to an embodiment.

Fig. 6 is a logic diagram illustrating an example implementation of a part of a control logic according to an embodiment.

Fig. 7 is a diagram illustrating operation of the control logic of Fig. 6.

Figs. 8A to 8C are simulation results illustrating some embodiments.

DETAILED DESCRIPTION

In the following, various embodiments will be described in detail referring to the attached drawings. These embodiments are to be taken as illustrative examples only and are not to be construed as limiting. For example, other embodiments may comprise other features than the ones explicitly shown and described herein. In some embodiments, in addition to the features or components explicitly shown and described, other features or components, for example features or components used in conventional power converters, may be provided. For example, embodiments described herein relate to a specific control scheme in a burst mode. Other operation modes and/or features of the power converters described may be implemented as in conventional power converters.

Features or components from different embodiments may be combined to form further embodiments unless noted otherwise. Variations or modifications described for one of the embodiments are also applicable to other embodiments and will therefore not be described repeatedly.

Connections or couplings as described herein refer to connections or couplings for transmitting data, signals, voltages or currents, for example electrical connections or, in case logic circuits are described, logical connections.

The term "a switch" or "the switch" is used herein to refer to one or more switches.

Power converters described in the following comprise a first stage and a second stage as an example. In other embodiments, more than two power stages may be provided.

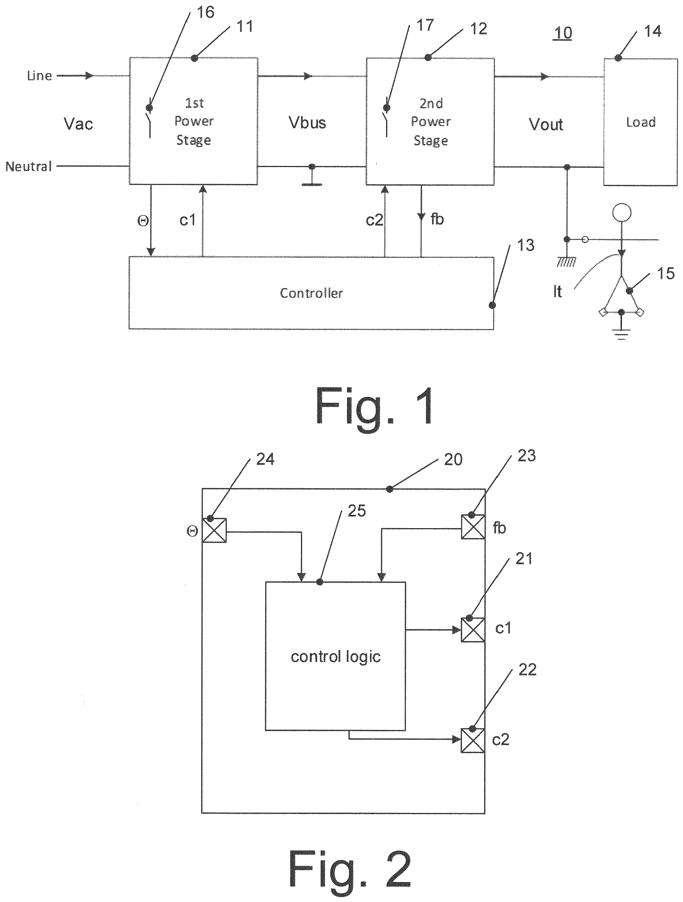

Turning now to the figures, Fig. 1 illustrates a power converter 10 according to an embodiment.

Power converter 10 of Fig. 1 comprises two power stages, namely a first stage 11 and a second stage 12 controlled by a controller 13 according to techniques discussed herein below. First stage 11 in the example of Fig. 1 receives an AC (alternating current) voltage Vac, for example a mains voltage provided via two lines, commonly referred to as "line" and "neutral". First stage 11 in some embodiments may be a power factor correction (PFC) stage.

First stage 11 provides a bus voltage Vbus based on the voltage Vac to second stage 12. As an example, Vac may be a 220 V (root-mean-square) AC voltage with a frequency of 50 Hz, as common in many European or other countries, and Vbus may be a DC (direct current) voltage of about 400 V. Other input voltages or a wider range of input voltages, for example to accommodate mains voltages in different countries, are also possible.

Second stage 12 then converts the bus voltage Vbus to an output voltage Vout to a load 14. Output voltage Vout may for example be a voltage of about 20 V, of about 12 V or any other voltage required by the load. Second stage 12 may comprise any conventional converter topology like a buck converter, a boost converter, a buck-boost converter, a converter with an isolated topology, a resonant converter, an LLC converter, or flyback converter, etc. While a single load 14 is shown in Fig. 1, in other embodiments a plurality of outputs for a plurality of loads may be provided.

Each of first stage 11 and second stage 12 comprises one or more power switches, represented by a power switch 16 of first stage 11 and a power switch 17 of second stage 12. As mentioned, the term "a switch" or "the switch" is used herein to refer to one or more switches. The number of switches depends on the particular topology of the respective stage. For example, in some topologies a half bridge comprising two switches may be used in first stage 11, second stage 12 or both. In many applications, power switches 16 and 17 may be implemented as transistors like field effect transistors (FETs), bipolar junction transistors (BJTs) or insulated gate bipolar transistors (IGBTs). Switching power switch 16 is controlled by controller 13 using a control signal c1, which controls the conversion of the input voltage Vac to the bus voltage Vbus. The power switch 17 of second stage 12 is controlled by a control signal c2, which controls the conversion of the bus voltage Vbus to the output voltage Vout.

Depending on the control scheme for controlling the switches, a person 15 touching a housing of power converter 10 may cause flowing of a touch current It, which may be unpleasant for the person and could even lead to an injury.

Control signals c1, c2 at least in a burst mode of operation described herein may be based on phase information $\Theta$ indicating a phase of AC voltage Vac and based on a feedback signal fb. A feedback signal, as understood herein, is a signal which gives some information about the output voltage Vout and/or a power consumption of load 14. For example, an indication of voltage Vout may be provided to controller 13 via a feedback path, or via an auxiliary winding on a primary side of a transformer used in second power stage 12 as feedback signal fb. Generally, feedback signal fb may be any conventional signal giving such an indication.

In case little or no output power is required by load 14, first power stage 11 and second power stage 12, may be controlled in a burst mode operation. Bursts for switching one or more switches 16 of first power stage 11 and burst for switching one or more switches 17 of second power stage 12 may be coordinated or aligned using techniques described herein further below.

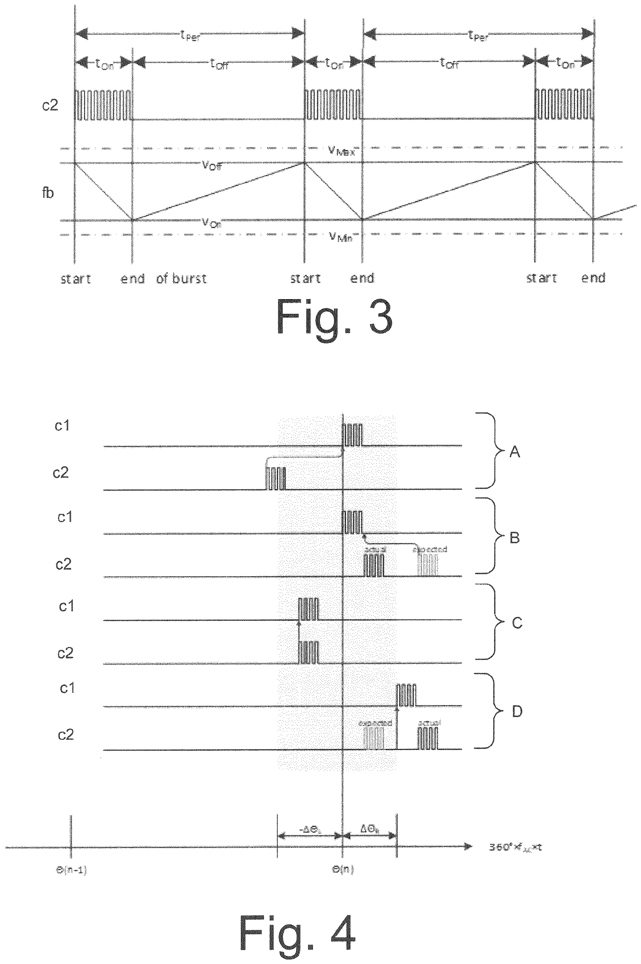

Before explaining such techniques in more detail, with reference to Fig. 2, an example implementation of a power converter controller will be described, and with reference to Fig. 3 some general explanations regarding burst mode operation will be made.

Fig. 2 illustrates a power converter controller 20 according to an embodiment. Power converter controller 20 in the embodiment of Fig. 2 comprises two input terminals 23, 24, two output terminals 21, 22 and a control logic 25. Power converter controller 20 may be used as controller 13 of Fig. 1, but is not restricted thereto.

While two input terminals and two output terminals are shown in Fig. 2, in other embodiments other numbers of input terminals and output terminals may be provided. In addition, as in any conventional circuits, terminals for receiving a supply voltage supplying operation of power converter controller 20 or any other terminals conventionally used in power converter controllers may be provided.

At input terminal 24, in operation power converter controller 20 receives information about a phase of an AC input signal of the power converter, for example about a phase of signal Vac of Fig. 1. This signal may be the input voltage itself (Vac in case of Fig. 1) or some signal derived from the input voltage and comprising the phase information. At input terminal 23, power converter controller 20 in operation receives a feedback signal fb comprising feedback information regarding a load, as already explained referring to Fig. 1.

A control logic 25 receives the signals from input terminals 24, 23 and outputs a control signal c1 for controlling switching of a power switch of a first stage of the power converter at output terminal 21 and a signal c2 for controlling switching of a second power switch of a second stage of the power converter at output terminal 22. In case the first stage or the second stage comprise more than one switch, a corresponding plurality of control signals may be output at a corresponding plurality of output terminals.

Control logic 25 may be implemented in various manners. For example, a correspondingly programmed processor or microcontroller may be used in some embodiments. In other embodiments, the control logic may be implemented in hardware, for example by using an application specific integrated circuit (ASIC) or a field programmable gate array (FPGA). Control logic 25 is configured to control switching of the first and second power switches in a burst mode of operation disclosing techniques explained further below. In addition to this burst mode of operation, further modes of operation like a pulse width modulation control may be implemented in any conventional manner. For example, the burst mode of operation, as already mentioned above, may be used if no or little output power below a burst mode exit threshold is required by a load.

Fig. 3 is a diagram for illustrating burst mode operation.

In burst mode operation, active times are times where switches are switched on and off alternatingly to provide power to an output and inactive times are times where switches are in a state where no power is provided to the output, e.g. off, in a tristate or even on, without switching. In Fig. 3, for example a burst mode operation for the second stage 12 of Fig. 1 is shown. The active periods last respective times $t_{on}$. During times $t_{on}$, control signal c2 opens and closes power switch 17 of second stage 12 to provide power to load 14. During inactive periods having a duration of $t_{off}$, power switch 17 is open such that no power is provided to the output. This gives a complete period duration $t_{per}=t_{on}+t_{off}$. $t_{per}$ may vary from period to period.

The burst mode in the example of Fig. 3 may for example be controlled to keep the feedback signal between a maximum value $v_{max}$ and a minimum value $v_{min}$. $v_{max}$ may for example correspond to a minimum voltage at the output, and $v_{min}$ may correspond to a maximum voltage at the output. When the feedback voltage is at a value $v_{off}$, the burst starts, and when it then reaches a value $v_{on}$, the burst ends, and the time $t_{off}$ begins. In this way, the power stage can "track the load", i.e. keep the voltage between desired levels, even if the power consumption of the load slightly changes. For example, when the power consumption increases, the burst length increases, and when the power consumption decreases, the burst length decreases. This "tracking of the load" shown in Fig. 3 in embodiments is used to control bursts of the second power stage, i.e. to generate the control signal c2. It should be noted that the behavior of the feedback signal shown in Fig. 3 is merely an example, and in other implementations other behaviors are possible, e.g. an inverted behavior (rising during $t_{on}$ and falling during $t_{off}$).

Furthermore, in embodiments bursts of the first stage are coordinated with bursts of the second stage and with a phase of the input signal as will be discussed next. Generally, as already mentioned, it is advantageous to place bursts of the first power stage at or near an extremal value (maximum or minimum, or in other words maximum of the absolute value) of the input voltage. On the other hand, it is also desirable to provide bursts of the first power stage at a similar or the same time as bursts of the second power stage, to on the one hand optimize power transfer between the stages and on the other hand enable longer times where both power stages are off (corresponding to time period $t_{off}$ in Fig. 3), such that during these times the controller may be set to a sleep mode where it is essentially disabled to save power. Furthermore, the time between bursts of the first power stage, similar as for the second power stage, depends on load requirement.

Embodiments which will now be described referring to Figs. 4 to 8 are based on control schemes which take these different requirements into account to control bursts of both the first and the second power stage.

Embodiments discussed herein use a target phase range around a next predefined target phase position $\Theta(n)$ of the input voltage. $T_1$ will be used to denote the time of this next predefined target phase position and is related to $\Theta(n)$ according to

$$360° * f_{AC} * T_1 = \Theta(n), \text{ with } \Theta(n-1) < 360° * f_{AC} * t < \Theta(n)$$

$\Theta(n-1)$ is the previous predefined phase position (of a previous burst), $f_{AC}$ is the frequency of the AC input signal Vac, and t is the actual time. In embodiments, the predefined target phase values $\Theta(n)$, $\Theta(n-1)$ etc. are at or near extremal positions of the input voltage Vac, i.e. at minima or maxima or, in other words, at maxima of the absolute value of the input voltage.

A time spacing between $\Theta(n-1)$, $\Theta(n)$, etc. as mentioned above may depend on the load. For example, the various predefined phase positions may be spaced apart by any integer multiple of the period of the AC input signal. Based on this predefined phase position $\Theta(n)$, a phase range is defined by $\Theta(n)-\Delta\Theta_L$ as a beginning of the phase range and $\Theta(n)+\Delta\Theta_R$ as the end of the phase range. $\Delta\Theta_L$ and $\Delta\Theta_R$ in many applications will be positive values, and in some cases $\Delta\Theta_R$ may be equal to $\Delta\Theta_L$ such that $\Theta(n)$ is in the middle of the predefined phase range. However, other values of $\Delta\Theta_L$ and $\Delta\Theta_R$ are also possible. The length of the phase range therefore is $\Delta\Theta_R+\Delta\Theta_L$.

In embodiments, as mentioned above, the temporal position, in particular the starts of, the bursts for the second power switch of the second stage (shortly referred to as burst of the second stage) are determined by "tracking the load", i.e. based on the feedback signal, as explained with reference to Fig. 3. The position in time where the bursts of the second stage starts will be labelled $T_2$ in the following.

In embodiments, a temporal position of a next burst of the first power switch of the first stage (shortly referred to as burst of the first stage) is determined based on the predefined phase range as defined above and an estimated temporal position of $T_2$ as well as an actual temporal position of $T_2$, referred to in the following as estimated $T_2$ and actual $T_2$. The estimation of the estimated $T_2$ may be made by assuming that a next time period $t_{per}$ of Fig. 3 corresponds to a previous time period $t_{per}$ or by assuming that a next off-time $t_{off}$ of Fig. 3 corresponds to a previous off-time $t_{off}$ Deviations between the actual $T_2$ and this estimated $T_2$ occur for example when the load changes, which may lead to a different length of $t_{off}$ and $t_{per}$ For example, when the load increases, the feedback signal fb reaches $v_{off}$ faster, such that $t_{off}$ becomes shorter. Likewise, when the load decreases, $t_{off}$ becomes longer.

The start of the next burst of the first power stage may then be determined according to the following pseudocode, which may be implemented in control logic 25 of Fig. 4:

    **IF** $T_2$ occurs before the predefined phase range **OR** the *expected* $T_2$ is after the predefined phase range
    **THEN** Start next burst of first stage at $T_1$

    **ELSE IF** $T_2$ occurs within the predefined phase range
    **THEN** Start next burst of first stage at $T_2$

    **ELSE** Start next burst of first stage at the end of the predefined phase range.

Various cases, which may occur according to this pseudo code, will now be explained with reference to Fig. 4, where four cases A to D are shown.

For each of the cases, example control signals c1 and c2 controlling the first and second power switches, respectively, are shown. At the bottom of Fig. 4, the predefined phase range around $\Theta(n)$ is shown.

In case A, the burst of the second stage, i.e. $T_2$, according to control signal c2 occurs before the predefined phase range. In this case, the burst of the first stage according to control signal c1 is started at the predefined phase position $\Theta(n)$.

In case B, the expected $T_2$ is after the predefined phase range. Also in this case, the burst for the first stage is started at the predefined phase position $\Theta(n)$. In this case, it may happen that the actual $T_2$ is within the predefined phase range, but after $\Theta(n)$. This does not change the start of the burst of the first stage at $\Theta(n)$.

In case C, the actual $T_2$ and expected $T_2$ are within the predefined phase range. In this case, the burst of the first stage starts essentially at the same time (possibly with slight delay caused by circuitry used) as the burst of the second stage.

Case D shows a situation where the expected $T_2$ is within the predefined phase range. However, the actual $T_2$ is only after the predefined phase range, which may for example happen when power requirements of the load decrease. In this case, the burst for the first power stage starts at the end of the predefined phase range.

This control scheme ensures that the start of the bursts of the first stage always starts within the predefined phase range, which may help to reduce touch current and help to increase use of the input power. On the other hand, if possible (as in case C), the bursts of the first and second stages occur at essentially the same time, which may help to increase power transfer between the power stages. Further, as the temporal position of the bursts of the second stage are determined based on the feedback signal, the output power or voltage can "track the load", which for example may help to reduce ripples in the output voltage.

For cases where $\Delta\Theta_R$ is smaller or equal to 0, which means that the predefined phase range is before $\Theta(n)$, the above pseudo code may be simplified to:

    **IF** the actual $T_2$ occurs before the predefined phase range **OR** the expected $T_2$ is after the predefined phase range
    **THEN** Start next burst of first stage at $T_1$

    **ELSE IF** $T_2$ occurs within the predefined phase range
    **THEN** Start next burst of first stage at $T_2$

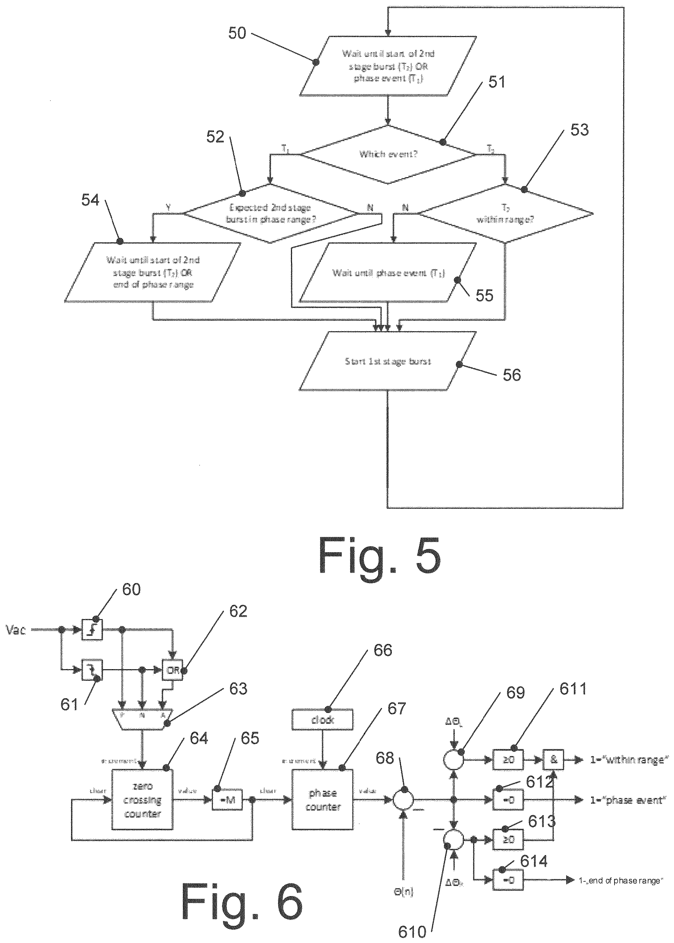

Fig. 5 illustrates a flow chart illustrating a method according to some embodiments, which also implements the above-described rules.

At 50, the method is between bursts, i.e. during a time $t_{off}$ of Fig. 3 and before the next predefined phase position $\Theta(n)$ corresponding to a next time $T_1$ and before next bursts of the first and second stages occur. The next predefined phase $\Theta(n)$ at $T_1$ will also be referred to as "phase event" in the description of Fig. 5. While the method of Fig. 5 is executed, determination of the position of the second burst ($T_2$) may occur based on a feedback signal as explained referring to Fig. 3.

At 50, the method waits until either a next burst of the second power stage starts at $T_2$ or the phase event, i. e. the time $T_1$ occurs.

At 51, the method checks which of these two possibilities have occurred. If the next burst of the second power stage occurred, at 53 the method checks if this burst of the second power stage is within the predefined phase range. If this is the case, at 56 the burst for the first stage is started. This corresponds to case C of Fig. 4. If the burst of the second power stage is not within the predefined range at 53, at 55 the method waits until the phase event, i.e. until the predefined phase position occurs, and then starts the burst for the first power stage at 56. This corresponds to case A of Fig. 4.

If at 51 it is determined that the phase event occurred, i.e. $\Theta(n)$ is reached, at 52 the method checks if the expected temporal position of the burst of the second power stage, i.e. expected $T_2$ is in the predefined range. If this is not the case, the first stage burst is started at 56. This corresponds to case B, where the expected $T_2$ is after the predefined range. If the expected second stage burst is in the phase range, at 54 the method waits either until the start of the second stage burst or the end of the predefined phase range, and then starts the first stage burst at 56. In case the end of the phase range occurs first, this corresponds to case D of Fig. 4. If the second stage burst is at the expected position or otherwise within the predefined phase range, this case corresponds to case C, with the bursts starting after $\Theta(n)$ essentially at the same time.

After 56, the method reverts to 54 for determination of the next bursts.

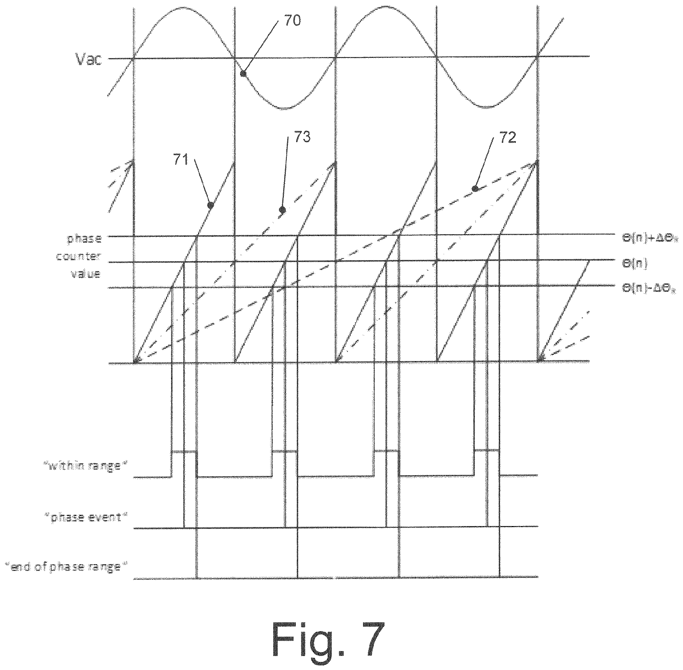

Next, referring to Fig. 6, a logic circuit will be described which may be for example implemented in control logic 25 which may be used to implement the method of Fig. 5. For further explanation, reference is made to Fig. 7 where various signals of the logic current of Fig. 6 are shown.

The logic circuit of Fig. 6 in particular serves to determine the position of the predefined phase range and the predefined phase position used in the embodiments discussed above.

The circuit of Fig. 6 receives a representation of the input voltage Vac. In some embodiments, some of the circuits of Fig. 6 may be implemented as an analog circuit, while in other embodiments, Vac may be digitized, and in this case the circuit of Fig. 6 is a digital circuit. In a digital implementation, for example counters described in the following, may be digital hardware counters. In an analog implementation, counters may be implemented by a capacitor charged by a current source when incrementing the counter and short-circuiting the capacitor when resetting to 0. Likewise, comparators used may be implemented as hardware comparators, in software or as analog comparators.

The signal Vac is provided to zero crossing detectors 60, 61. Zero crossing detector 61 detects zero crossings from negative to positive voltage of Vac, which are referred to as "P" zero crossings herein. Zero crossing detector 61 detects zero crossings from a positive to negative voltage of Vac, also referred to as "N" herein. An output of zero crossing detector 60 is provided to a first input of a multiplexer 63 and a first input of an OR gate 62, and an output of zero crossing detector 61 is provided to a second input of multiplexer 63 and a second input of OR gate 62. An output of OR gate 62 is provided to a third input of multiplexer 63. With multiplexer 63, it may be selected if the following processing is carried out on P zero crossings, N zero crossings or all ("A") zero crossings. It should be noted that in other embodiments, only one zero crossing detector may be provided, and multiplexer 63 may be omitted, such that only one type of zero crossings (P, N or A) is always used.

An output of multiplexer 63 is provided to a zero crossing counter 64 which counts the type of zero crossings selected by multiplexer 63, until, as determined by a comparator 65, a predefined number M of zero crossings is reached. M is also referred to as wrap around value and defines how many half (in case "A" is selected by multiplexer 63) or full (in case "P" or "N" is selected by multiplexer 63) AC input cycles of the AC input signal Vac are skipped ("wrapped around") between bursts of the first power stage. The number M may depend on the load and may be determined for example based on the feedback signal fb mentioned above. For low loads, M may be higher, while for smaller loads M may be larger.

When the number M is reached, a phase counter 67 clocked by a clock 66 starts counting. In other words, when M is reached, the phase counter 67 is set to 0 and then increments by one at every clock cycle of clock 66. An output value of phase counter 67 is provided to a subtractor 68, where a value representing the predefined target phase $\Theta(n)$ is subtracted from this output value. Before $\Theta(n)$ is reached, therefore the output value of subtractor 68 is positive, and after that, it is negative. At $\Theta(n)$, the output value of subtractor 67 is 0. This is detected by a comparator 612 as the above-mentioned phase event, when $\Theta(n)$ is reached.

Furthermore, at a subtractor 610, the output value of subtractor 68 is subtracted from $\Delta\Theta_R$ and at an adder 69 the output value is added to $\Delta\Theta_L$. When the output value of adder 69 is greater than 0, which is detected at a comparator 611, the value $\Theta(n)-\Delta\Theta_L$ has been passed, and the phase enters the predefined range. Likewise, if the output of subtractor 610 is greater than 0, which is determined at a comparator 613, the end of the predefined range has not been reached yet. The outputs of comparators 611 and 613 are provided to an AND gate 615, and if the output of AND gate 615 is 1, this indicates that the phase is within the predefined range.

Furthermore, at a comparator 614, it is determined when the output of subtractor 610 reaches 0, which signals the end of the phase range and may for example indicate the start of the burst of the first power stage in case D of Fig. 4.

For further illustration of the circuit of Fig. 6, in Fig. 7, a curve 70 shows an example for a sinusoidal input signal Vac. A solid curve 71 shows an example for the output of the phase counter 67 in a case where counting starts at every zero crossing of the input signal ("A" selected by multiplexer 63, M set to 1 such that the phase counter 61 starts new at every zero crossing). The values $\Theta(n)+\Delta\Theta_R$, $\Theta(n)$ and $\Theta(n)-\Delta\Theta_L$ are also shown. When the phase counter value as indicated by line 71 crosses the line $\Theta(n)-\Delta\Theta_L$, the range starts, and the signal "within range" goes to 1. When line 71 crosses $\Theta(n)+\Delta\Theta_R$, the signal "within range" goes to 0 again. Furthermore, the "end of phase range" is indicated by 1. When line 71 crosses $\Theta(n)$, the "phase event" is indicated. A dashed line 72 in Fig. 7 shows an alternative output signal of phase counter 67, where the phase counter is reset at every second crossing of second 74 from negative to positive. This corresponds to selecting "P" by multiplexer 63 and setting M to 2. A dot-dash line shows a case where the phase counter is reset to 0 at every zero crossing from negative to positive, corresponding to selecting "P" by multiplexer 63 and setting M to 1. As mentioned, these settings may be made depending on a power requirement by a load.

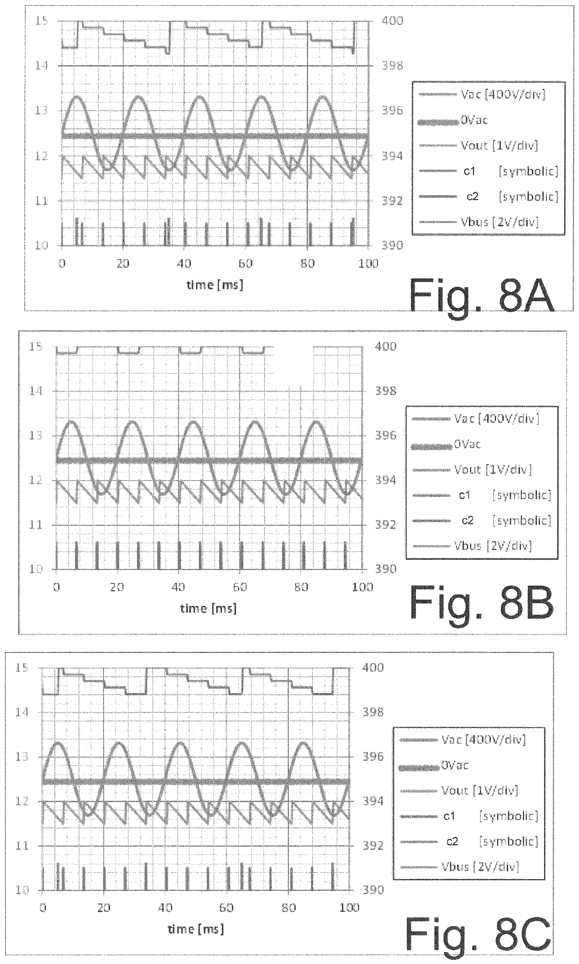

Next, for further illustration, simulations are shown in Figs. 8A to 8C. Figs. 8A and 8B show reference examples, whereas in Fig. 8C the simulations of techniques as discussed herein, for example when applying the rules discussed referring to Fig. 4 and/or the method of Fig. 5 is applied, are shown.

In each of Figs. 8A to 8C, an example for the input voltage Vac, for the output voltage Vout and for the bus voltage Vbus are shown. Furthermore, the control signals c1 and c2 are shown in a symbolic manner, where each "pulse" shown in Figs. 8A to 8C may correspond to a corresponding burst width a corresponding burst duration.

In all cases of Figs. 8A to 8C, the second power stage "tracks the load" as mentioned above, or in other words, the bursts c2 are determined based on the feedback signal as for example explained referring to Fig. 3. In Fig. 8A, as a reference example the positions of the burst of the first power stage (control signal c1) are determined such that they are always at an extremal value (minimum or maximum value) of the AC input signal, in this case at every third extremal value. This is not ideal for the second and fourth bursts in Fig. 8A, as there simultaneous bursts for the first and second power stage would have been possible and enabled a better power transfer.

In Fig. 8B, as a reference example the rule has been applied that the bursts of the first and second stage always occur at the same time. This leads to some bursts with a low efficiency, in particular the first, fourth, seventh etc. bursts, which are near a zero crossing of the AC input voltage, where power generation by the first power stage is reduced.

Fig. 8C shows the situation when rules as discussed herein are applied. Compared to Fig. 8A, for the second and fourth bursts of the first power stage a simultaneous application of the bursts has been achieved. Therefore, in this way, a high efficiency of the first stage, for example for power factor correction, low input power consumption and low touch currents may be achieved.

**Claims**

1.  A power converter controller (13; 20), comprising:

    a first output (21) configured to be coupled to a first power switch (16) of a first stage (11) of a power converter (10), a second output (22) configured to be coupled to a second power switch (17) of a second stage (12) of the power converter (10), wherein an output of the first stage (11) is coupled to an input of the second stage (12), an input (23) configured to receive a feedback related to a load (14) of the power converter (10), and a control logic (25) configured to control the first power switch (16) and the second power switch (17) at least in a burst mode of operation,
    **characterized in that** the control logic (25), in the burst mode of operation, is configured to:

    determine a temporal position of a next burst of the second power switch (17) based on the feedback, and determine a temporal position of a next burst of the first power switch (16) based on the temporal position of the next burst of the second power switch (16) and a predefined phase range with respect to a predefined phase position ($\Theta(n)$) for a phase of an input signal (Vac) of the power converter (10).

2.  The power converter controller (13; 20) of claim 1, wherein the predefined phase position ($\Theta(n)$) corresponds to an extremal value of the input signal (Vac) of the power converter.

3.  The power converter controller (13; 20) of claim 1 or 2, wherein the control logic (25) is configured to determine the temporal position of the next burst of the first power switch (16) to be at the predefined phase position ($\Theta(n)$) if the temporal position of the next burst of the second power switch (17) is before the predefined phase range.

4.  The power converter controller (13; 20) of any one of claims 1 to 3, wherein the control logic (25) is configured to determine the temporal position of the next burst of the first power switch (16) to be at the temporal position of the next burst of the second power switch (17), if the temporal position of the next burst of the second power switch (17) is within the phase range.

5. The power converter controller (13; 20) of any one of claims 1 to 4, wherein determining the temporal position of the next burst of the second power switch (17) comprises determining an estimated temporal position of the next burst of the second power switch (17) and an actual temporal position of the next burst of the second power switch (17).

6. The power converter controller (13; 20) of claim 5, wherein the control logic (25) is configured to determine the temporal position of the next burst of the first power switch (16) to be at the predefined phase position ($\Theta(n)$) if the estimated temporal position of the next burst of the second power switch (17) is after the predefined phase range and the actual position of the next burst of the second power switch (17) is after the predefined phase position ($\Theta(n)$).

7. The power converter controller (13; 20) of claim 5 or 6, wherein the control logic (25) is configured to determine the temporal position of the next burst of the first power switch (16) to be at the end of the predefined phase range if the estimated temporal position of the next burst of the second power switch (17) is within the predefined phase range after the predefined phase position ($\Theta(n)$) and the actual temporal position of the next burst of the second power switch (17) is after the predefined phase range.

8. The power converter controller (13; 20) of any one of claims 1 to 7, wherein the power converter controller (13; 20) for detecting the predefined phase range, comprises:

at least one zero crossing detector (60, 61) configured to detect zero crossings of the input signal (Vac) of the power converter (10),
a phase counter (67) configured to start counting according to a clock signal after a predefined number of zero crossings has been detected by the at least one zero crossing detector (60, 61), and
a comparator arrangement (611-614) configured to detect the predefined phase range based on a value indicating the predefined phase position, a value indicating a width of the predefined phase range before the predefined phase position, and
a value indicating a width of the predefined phase range after the predefined phase position.

9. The power converter controller (13; 20) of claim 8, further comprising a zero crossing counter (64) configured to count a number of zero crossings, and
a comparator (65) configured to detect when the predefined number of zero crossings is reached.

10. A power converter (10), including:

the power converter controller (13; 20) of any one of claims 1 to 9,
the first stage (11), and
the second stage (12).

11. The power converter (10) of claim 10, wherein the first stage (11) is a power factor correction stage, and wherein the second stage (12) is a voltage converter stage.

12. A method for controlling a power converter in a burst mode,

the power converter comprising a first stage (11) comprising a first power switch (16), and
a second stage (12) comprising a second power switch (17), wherein an output of the first stage (11) is coupled to an input of the second stage (12), the method is **characterized by** determining a temporal position of a next burst of the second power switch (17) based on a feedback related to a load of the power converter (10), and
determining a temporal position of a next burst of the first power switch (16) based on the temporal position of the next burst of the second power stage (16) and a predefined phase range with respect to a predefined phase position ($\Theta(n)$) for a phase of an input signal (Vac) of the power converter (10).

13. The method of claim 12,

further comprising determining the temporal position of the next burst of the first power switch (16) to be at the predefined phase position ($\Theta(n)$) if the temporal position of the next burst of the second power switch (17) is before the predefined phase range,

and/or

further comprising determining the temporal position of the next burst of the first power switch (16) to be at the temporal position of the next burst of the second power switch (17) if the temporal position of the next burst of the second power switch (17) is within the phase range,

and/or

wherein determining the temporal position of the next burst of the second power switch (17) comprises determining an estimated temporal position of the next burst of the second power switch (17) and an actual temporal position of the next burst of the second power switch (17),

and/or

further comprising determining the temporal position of the next burst of the first power switch (16) to be at the predefined phase position ($\Theta(n)$) if the estimated temporal position of the next burst of the second power switch (17) is after the predefined phase range and the actual position of the next burst of the second power switch (17) is after the predefined phase position (8(n)),

and/or

further comprising determining the temporal position of the next burst of the first power switch (16) to be at the end of the predefined phase range if the estimated temporal position of the next burst of the second power switch (17) is within the predefined phase range after the predefined phase position ($\Theta(n)$) and the actual temporal position of the next burst of the second power switch (17) is after the predefined phase range.

14. The method of any one of claims 12 or 13, wherein the method comprises:

waiting until either a start of the next burst of the second power switch (17) or the predefined phase position ($\Theta(n)$),

in case the predefined phase position occurs, determine if an expected temporal position of the next burst of the second power switch (17) is within the predefined phase range,
if the expected temporal position is within the predefined phase range, wait until the start of the burst of the second power switch (17) or the end of the predefined phase range,
if the burst of the second power switch (17) or the predefined phase position is the start of the burst of the second power switch (17) and if the burst of the second power switch (17) is not within the predefined phase range, wait until the predefined phase position ($\Theta(n)$), and

start a burst of the first power switch (16).

15. A computer program, which, when executed on one or more processors of the power converter controller (13; 20) according to claim 1, causes execution of the method of any one of the preceding method claims 12 to 14.

**Patentansprüche**

1. Stromrichtersteuerung (13; 20), umfassend:

einen ersten Ausgang (21), der dazu ausgelegt ist, mit einem ersten Stromschalter (16) einer ersten Stufe (11) eines Stromrichters (10) gekoppelt zu werden,
einen zweiten Ausgang (22), der dazu ausgelegt ist, mit einem zweiten Stromschalter (17) einer zweiten Stufe (12) des Stromrichters (10) gekoppelt zu werden,
wobei ein Ausgang der ersten Stufe (11) mit einem Eingang der zweiten Stufe (12) gekoppelt ist,
einen Eingang (23), der dazu ausgelegt ist, eine Rückmeldung, die sich auf eine Last (14) des Stromrichters (10) bezieht, zu empfangen, und
eine Steuerlogik (25), die dazu ausgelegt ist, den ersten Stromschalter (16) und den zweiten Stromschalter (17) zumindest in einem Burst-Betriebsmodus zu steuern,
**dadurch gekennzeichnet, dass** die Steuerlogik (25) in dem Burst-Betriebsmodus dazu ausgelegt ist:

eine zeitliche Position eines nächsten Bursts des zweiten Stromschalters (17) basierend auf der Rückmeldung zu bestimmen, und
eine zeitliche Position eines nächsten Bursts des ersten Stromschalters (16) basierend auf der zeitlichen Position des nächsten Bursts des zweiten Stromschalters (16) und einem vordefinierten Phasenbereich hinsichtlich einer vordefinierten Phasenlage ($\Theta(n)$) für eine Phase eines Eingangssignals (Vac) des Stromrichters (10) zu bestimmen.

2. Stromrichtersteuerung (13; 20) nach Anspruch 1, wobei die vordefinierte Phasenlage ($\Theta$(n)) einem Extremalwert des Eingangssignals (Vac) des Stromrichters entspricht.

3. Stromrichtersteuerung (13; 20) nach Anspruch 1 oder 2, wobei die Steuerlogik (25) dazu ausgelegt ist, die zeitliche Position des nächsten Bursts des ersten Stromschalters (16) als an der vordefinierten Phasenlage ($\Theta$(n)) liegend zu bestimmen, wenn die zeitliche Position des nächsten Bursts des zweiten Stromschalters (17) vor dem vordefinierten Phasenbereich liegt.

4. Stromrichtersteuerung (13; 20) nach einem der Ansprüche 1 bis 3, wobei die Steuerlogik (25) dazu ausgelegt ist, die zeitliche Position des nächsten Bursts des ersten Stromschalters (16) als an der zeitlichen Position des nächsten Bursts des zweiten Stromschalters (17) liegend zu bestimmen, wenn die zeitliche Position des nächsten Bursts des zweiten Stromschalters (17) innerhalb des Phasenbereichs liegt.

5. Stromrichtersteuerung (13; 20) nach einem der Ansprüche 1 bis 4, wobei das Bestimmen der zeitlichen Position des nächsten Bursts des zweiten Stromschalters (17) das Bestimmen einer geschätzten zeitlichen Position des nächsten Bursts des zweiten Stromschalters (17) und einer tatsächlichen zeitlichen Position des nächsten Bursts des zweiten Stromschalters (17) umfasst.

6. Stromrichtersteuerung (13; 20) nach Anspruch 5, wobei die Steuerlogik (25) dazu ausgelegt ist, die zeitliche Position des nächsten Bursts des ersten Stromschalters (16) als an der vordefinierten Phasenlage ($\Theta$(n)) liegend zu bestimmen, wenn die geschätzte zeitliche Position des nächsten Bursts des zweiten Stromschalters (17) nach dem vordefinierten Phasenbereich liegt und die tatsächliche Position des nächsten Bursts des zweiten Stromschalters (17) nach der vordefinierten Phasenlage ($\Theta$(n)) liegt.

7. Stromrichtersteuerung (13; 20) nach Anspruch 5 oder 6, wobei die Steuerlogik (25) dazu ausgelegt ist, die zeitliche Position des nächsten Bursts des ersten Stromschalters (16) als am Ende des vordefinierten Phasenbereichs liegend zu bestimmen, wenn die geschätzte zeitliche Position des nächsten Bursts des zweiten Stromschalters (17) innerhalb des vordefinierten Phasenbereichs nach der vordefinierten Phasenlage ($\Theta$(n)) liegt und die tatsächliche zeitliche Position des nächsten Bursts des zweiten Stromschalters (17) nach dem vordefinierten Phasenbereich liegt.

8. Stromrichtersteuerung (13; 20) nach einem der Ansprüche 1 bis 7, wobei die Stromrichtersteuerung (13; 20) zum Erkennen des vordefinierten Phasenbereichs umfasst:

mindestens einen Nulldurchgangsdetektor (60, 61), der dazu ausgelegt ist, Nulldurchgänge des Eingangssignals (Vac) des Stromrichters (10) zu erkennen,
einen Phasenzähler (67), der dazu ausgelegt ist, mit dem Zählen gemäß einem Taktsignal zu beginnen, nachdem eine vordefinierte Anzahl von Nulldurchgängen durch den mindestens einen Nulldurchgangsdetektor (60, 61) erkannt worden ist, und
eine Komparatoranordnung (611-614), die dazu ausgelegt ist, den vordefinierten Phasenbereich basierend auf einem Wert zu erkennen, der die vordefinierte Phasenlage angibt, einem Wert, der eine Breite des vordefinierten Phasenbereichs vor der vordefinierten Phasenlage angibt, und einem Wert, der eine Breite des vordefinierten Phasenbereichs nach der vordefinierten Phasenlage angibt.

9. Stromrichtersteuerung (13; 20) nach Anspruch 8, die ferner einen Nulldurchgangszähler (64) umfasst, der dazu ausgelegt ist, eine Anzahl von Nulldurchgängen zu zählen, und einen Komparator (65), der dazu ausgelegt ist, zu erkennen, wenn die vordefinierte Anzahl von Nulldurchgängen erreicht ist.

10. Stromrichter (10), beinhaltend:

die Stromrichtersteuerung (13; 20) nach einem der Ansprüche 1 bis 9,
die erste Stufe (11), und
die zweite Stufe (12).

11. Stromrichter (10) nach Anspruch 10, wobei die erste Stufe (11) eine Stromfaktorkorrekturstufe ist, und wobei die zweite Stufe (12) eine Spannungswandlerstufe ist.

12. Verfahren zum Steuern eines Stromrichters in einem Burst-Modus,

wobei der Stromrichter eine erste Stufe (11) umfasst, die einen ersten Stromschalter (16) umfasst, und eine zweite Stufe (12), die einen zweiten Stromschalter (17) umfasst, wobei ein Ausgang der ersten Stufe (11) mit einem Eingang der zweiten Stufe (12) gekoppelt ist, das Verfahren **gekennzeichnet ist durch** Bestimmen einer zeitlichen Position eines nächsten Bursts des zweiten Stromschalters (17) basierend auf einer Rückmeldung, die sich auf eine Last des Stromrichters (10) bezieht, und Bestimmen einer zeitlichen Position eines nächsten Bursts des ersten Stromschalters (16) basierend auf der zeitlichen Position des nächsten Bursts der zweiten Leistungsstufe (16) und eines vordefinierten Phasenbereichs hinsichtlich einer vordefinierten Phasenlage ($\Theta$(n)) für eine Phase eines Eingangssignals (Vac) des Stromrichters (10).

**13.** Verfahren nach Anspruch 12,

ferner umfassend das Bestimmen der zeitlichen Position des nächsten Bursts des ersten Stromschalters (16) als an der vordefinierten Phasenlage ($\Theta$(n)) liegend, wenn die zeitliche Position des nächsten Bursts des zweiten Stromschalters (17) vor dem vordefinierten Phasenbereich liegt,
und/oder
ferner umfassend das Bestimmen der zeitlichen Position des nächsten Bursts des ersten Stromschalters (16) als an der zeitlichen Position des nächsten Bursts des zweiten Stromschalters (17) liegend, wenn die zeitliche Position des nächsten Bursts des zweiten Stromschalters (17) innerhalb des Phasenbereichs liegt,
und/oder
wobei das Bestimmen der zeitlichen Position des nächsten Bursts des zweiten Stromschalters (17) das Bestimmen einer geschätzten zeitlichen Position des nächsten Bursts des zweiten Stromschalters (17) und einer tatsächlichen zeitlichen Position des nächsten Bursts des zweiten Stromschalters (17) umfasst,
und/oder
ferner umfassend das Bestimmen der zeitlichen Position des nächsten Bursts des ersten Stromschalters (16) als an der vordefinierten Phasenlage ($\Theta$(n)) liegend, wenn die geschätzte zeitliche Position des nächsten Bursts des zweiten Stromschalters (17) nach dem vordefinierten Phasenbereich liegt und die tatsächliche Position des nächsten Bursts des zweiten Stromschalters (17) nach der vordefinierten Phasenlage ($\Theta$(n)) liegt,
und/oder
ferner umfassend das Bestimmen der zeitlichen Position des nächsten Bursts des ersten Stromschalters (16) als am Ende des vordefinierten Phasenbereichs liegend, wenn die geschätzte zeitliche Position des nächsten Bursts des zweiten Stromschalters (17) innerhalb des vordefinierten Phasenbereichs nach der vordefinierten Phasenlage ($\Theta$(n)) liegt und die tatsächliche zeitliche Position des nächsten Bursts des zweiten Stromschalters (17) nach dem vordefinierten Phasenbereich liegt.

**14.** Verfahren nach einem der Ansprüche 12 oder 13, wobei das Verfahren umfasst:

warten, bis entweder einem Beginn des nächsten Bursts des zweiten Stromschalters (17) oder der vordefinierten Phasenlage ($\Theta$(n)),
für den Fall, dass die vordefinierte Phasenlage eintritt, zu bestimmen
wenn eine erwartete zeitliche Position des nächsten Bursts des zweiten Stromschalters (17) innerhalb des vordefinierten Phasenbereichs liegt,
wenn die erwartete zeitliche Position innerhalb des vordefinierten Phasenbereichs liegt, bis zum Beginn des Bursts des zweiten Stromschalters (17) oder bis zum Ende des vordefinierten Phasenbereichs zu warten,
wenn der Burst des zweiten Stromschalters (17) oder die vordefinierte Phasenlage der Beginn des Bursts des zweiten Stromschalters (17) ist und wenn der Burst des zweiten Stromschalters (17) nicht innerhalb des vordefinierten Phasenbereichs liegt, zu warten, bis zur vordefinierten Phasenlage ($\Theta$(n)), und
einen Burst des ersten Stromschalters (16) zu starten.

**15.** Computerprogramm, das, wenn es auf einem oder mehreren Prozessoren der Stromrichtersteuerung (13; 20) nach Anspruch 1 ausgeführt wird, das Ausführen des Verfahrens nach einem der vorhergehenden Verfahrensansprüche 12 bis 14 veranlasst.

**Revendications**

**1.** Commande (13 ; 20) de convertisseur de puissance, comprenant :

une première sortie (21) configurée pour être connectée à un premier interrupteur (16) de puissance d'un premier étage (11) d'un convertisseur (10) de puissance,
une deuxième sortie (22) configurée pour être connectée à un deuxième interrupteur (17) de puissance d'un deuxième étage (12) du convertisseur (10) de puissance,
dans laquelle une sortie du premier étage (11) est reliée à une entrée du deuxième étage (12),
une entrée (23) configurée pour recevoir une réaction se rapportant à une charge (14) du convertisseur (10) de puissance, et
une logique (25) de commande configurée pour commander le premier interrupteur (16) de puissance et le deuxième interrupteur (17) de puissance au moins dans un mode de fonctionnement à salve,
**caractérisée en ce que** la logique (25) de commande est, dans le mode de fonctionnement à salve, configurée pour :

déterminer une position temporelle d'une salve suivante du deuxième interrupteur (17) de puissance sur la base de la réaction, et
déterminer une position temporelle d'une salve suivante du premier interrupteur (16) de puissance sur la base de la position temporelle de la salve suivante du deuxième interrupteur (16) de puissance et d'une plage de phase définie à l'avance par rapport à une position ($\Theta(n)$) de phase définie à l'avance pour une phase d'un signal (Vac) d'entrée du convertisseur (10) de puissance.

2. Commande (13 ;20) de convertisseur de puissance suivant la revendication 1,
dans laquelle la position ($\Theta(n)$) de phase définie à l'avance correspond à une valeur extrême du signal (Vac) d'entrée du convertisseur de puissance.

3. Commande (13 ;20) de convertisseur de puissance suivant la revendication 1 ou 2,
dans laquelle la logique (25) de commande est configurée pour déterminer que la position temporelle de la salve suivante du premier interrupteur (16) de puissance est à la position ($\Theta(n)$) de phase définie à l'avance si la position temporelle de la salve suivante du deuxième interrupteur (17) de puissance est avant la plage de phase définie à l'avance.

4. Commande (13 ;20) de convertisseur de puissance suivant l'une quelconque des revendications 1 à 3, dans laquelle la logique (25) de commande est configurée pour déterminer que la position temporelle de la salve suivante du premier interrupteur (16) de puissance est à la position temporelle de la salve suivante du deuxième interrupteur (17) de puissance, si la position temporelle de la salve suivante du deuxième interrupteur (17) de puissance est dans la plage de phase.

5. Commande (13 ;20) de convertisseur de puissance suivant l'une quelconque des revendications 1 à 4, dans laquelle déterminer la position temporelle de la salve suivante du deuxième interrupteur (17) de puissance comprend déterminer une position temporelle estimée de la salve suivante du deuxième interrupteur (17) de puissance et une position temporelle en cours de la salve suivante du deuxième interrupteur (17) de puissance.

6. Commande (13 ;20) de convertisseur de puissance suivant la revendication 5, dans laquelle la logique (25) de commande est configurée pour déterminer que la position temporelle de la salve suivante du premier interrupteur (16) de puissance est à la position ($\Theta(n)$) de phase définie à l'avance si la position temporelle estimée de la salve suivante du deuxième interrupteur (17) de puissance est après la plage de phase définie à l'avance et si la position en cours de la salve suivante du deuxième interrupteur (17) de puissance est après la position ($\Theta(n)$) de phase définie à l'avance.

7. Commande (13 ;20) de convertisseur de puissance suivant la revendication 5 ou 6, dans laquelle la logique (25) de commande est configurée pour déterminer que la position temporelle de la phase suivante du premier interrupteur (16) de puissance est à l'extrémité de la plage de phase définie à l'avance si la position temporelle estimée de la salve suivante du deuxième interrupteur (17) de puissance est dans la plage de phase définie à l'avance après la position ($\Theta(n)$) de phase définie à l'avance et si la position temporelle en cours de la salve suivante du deuxième interrupteur (17) de puissance est après la plage de phase définie à l'avance.

8. Commande (13 ;20) de convertisseur de puissance suivant l'une quelconque des revendications 1 à 7, dans laquelle la commande (13 ; 20) de convertisseur de puissance pour détecter la plage de phase définie à l'avance comprend :

au moins un détecteur (60, 61) de passage par zéro configuré pour détecter des passages par zéro du signal (Vac) d'entrée du convertisseur (10) de puissance,

un compteur (76) de phase configuré pour commencer à compter en fonction d'un signal d'horloge après qu'un nombre défini à l'avance de passages par zéro a été détecté par le au moins un détecteur (60, 61) de passage par zéro, et

un agencement (611-614) de comparateur configuré pour détecter la plage de phase définie à l'avance sur la base d'une valeur indiquant la position de phase définie à l'avance, d'une valeur indiquant une largeur de la plage de phase définie à l'avance avant la position de phase définie à l'avance et

d'une valeur indiquant une largeur de la plage de phase définie à l'avance après la position de phase définie à l'avance.

9. Commande (13 ;20) de convertisseur de puissance suivant la revendication 8, comprenant en outre un compteur (64) de passages par zéro configuré pour compter un nombre de passages par zéro, et

un comparateur (65) configuré pour détecter quand le nombre défini à l'avance de passages par zéro est atteint.

10. Convertisseur (10) de puissance, comportant :

la commande (13 ; 20) de convertisseur de puissance suivant l'une quelconque des revendications 1 à 9, le premier étage (11), et le deuxième étage (12).

11. Convertisseur (10) de puissance suivant la revendication 10, dans lequel le premier étage (11) est un étage de correction de facteur de puissance et dans lequel le deuxième étage (12) est un étage de convertisseur de tension.

12. Procédé de commande d'un convertisseur de puissance dans un mode à salve,

le convertisseur de puissance comprenant un premier étage (11) comprenant un premier interrupteur (16) de puissance, et un deuxième étage (12) comprenant un deuxième interrupteur (17) de puissance, dans lequel une sortie du premier étage (11) est relié à une entrée du deuxième étage (12), le procédé étant **caractérisé en ce que** l'on détermine une position temporelle d'une salve suivante du deuxième interrupteur (17) de puissance sur la base d'une réaction se rapportant à une charge du convertisseur (10) de puissance, et

on détermine une position temporelle d'une salve suivante du premier interrupteur (16) de puissance sur la base de la position temporelle de la salve suivante du deuxième étage (16) de puissance et d'une plage de phase définie à l'avance par rapport à une position ($\Theta(n)$) de phase définie à l'avance pour une phase d'une signal (Vac) d'entrée du convertisseur (10) de puissance.

13. Procédé suivant la revendication 12,

comprenant en outre déterminer que la position temporelle de la salve suivante du premier interrupteur (16) de puissance est à la position ($\Theta(n)$) de phase définie à l'avance si la position temporelle de la salve suivante du deuxième interrupteur (17) de puissance est avant la plage de phase définie à l'avance,
et/ou
comprenant en outre déterminer que la position temporelle de la salve suivante du premier interrupteur (16) de puissance est à la position temporelle de la salve suivante du deuxième interrupteur (17) de puissance, si la position temporelle de la salve suivante du deuxième interrupteur (17) de puissance est dans la plage de phase,
et/ou
dans lequel déterminer la position temporelle de la salve suivante du deuxième interrupteur (17) de puissance de puissance comprend déterminer une position temporelle estimée de la salve suivante du deuxième interrupteur (17) de puissance et une position temporelle en cours de la salve suivante du deuxième interrupteur (17) de puissance,
et/ou
comprenant en outre déterminer que la position temporelle de la salve suivante du premier interrupteur (16) de puissance est à la position ($\Theta(n)$) de phase définie à l'avance si la position temporelle estimée de la salve suivante du deuxième interrupteur (17) de puissance est après la plage de phase définie à l'avance et si la position en cours de la salve suivante du deuxième interrupteur (17) de puissance est après la position ($\Theta(n)$) de phase définie à l'avance
et/ou
comprenant en outre déterminer que la position temporelle de la phase suivante du premier interrupteur (16) de puissance est à l'extrémité de la plage de phase définie à l'avance si la position temporelle estimée de la salve suivante du deuxième interrupteur (17) de puissance est dans la plage de phase définie à l'avance après la position ($\Theta$(n)) de phase définie à l'avance et si la position temporelle en cours de la salve suivante du deuxième interrupteur (17) de puissance est après la plage de phase définie à l'avance.

14. Procédé suivant l'une quelconque des revendications 12 ou 13, dans lequel le procédé comprend :

attendre soit un début de la salve suivante du deuxième interrupteur (17) de puissance, soit la position ($\Theta$(n)) de phase définie à l'avance,

dans le cas où la position de phase définie à l'avance se produit, déterminer si une position temporelle escomptée de la salve suivante du deuxième interrupteur (17) de puissance est dans la plage de phase définie à l'avance,
si la position temporelle escomptée est dans la plage de phase définie à l'avance, attendre jusqu'au début de la salve du deuxième interrupteur (17) de puissance ou la fin de la plage de phase définie à l'avance,
si la salve du deuxième interrupteur (17) de puissance ou la position de phase définie à l'avance est le début de la salve du deuxième interrupteur (17) de puissance et si la salve du deuxième interrupteur (17) de puissance n'est pas dans la plage de phase définie à l'avance, attendre jusqu'à la position ($\Theta$(n)) de phase définie à l'avance, et

faire commencer une salve du premier interrupteur (16) de puissance.

15. Programme d'ordinateur, qui, lorsqu'il est exécuté sur l'un ou plusieurs processeurs de la commande (13 ; 20) de convertisseur de puissance suivant la revendication 1, provoque l'exécution du procédé suivant l'une quelconque des revendications 12 à 14 de procédé précédentes.

# Fig. 1

# Fig. 2

Fig. 3

Fig. 4

# Fig. 5

# Fig. 6

Fig. 7

Fig. 8A

Fig. 8B

Fig. 8C

**EP 3 723 252 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017310224 A1
- EP 2899863 A1
- EP 3076537 A1